# EUROPÄISCHE PATENTSCHRIFT

(11) **EP 3 961 083 B1**
(45) Veröffentlichungstag und Bekanntmachung des Hinweises auf die Patenterteilung: **21.08.2024**
(21) Anmeldenummer: 20193632.5
(22) Anmeldetag: 31.08.2020
(51) Int. Cl.: F17C 7/02

(54) **TANKSYSTEM**
TANK SYSTEM
SYSTÈME DE CITERNE

(43) Veröffentlichungstag der Anmeldung: 02.03.2022
(73) Patentinhaber: Salzburger Aluminium Aktiengesellschaft, 5651 Lend (AT)
(72) Erfinder: BERGER, Simon, 6391 Fieberbrunn (AT)
(74) Vertreter: Weiser & Voith Patentanwälte Partnerschaft

(56) Entgegenhaltungen:
- EP-A1- 3 715 261
- DE-A1- 102006 025 656
- DE-A1- 102012 204 818
- DE-C- 539 336
- US-A- 2 842 942

## Beschreibung

Die vorliegende Erfindung betrifft ein Tanksystem, umfassend einen Behälter zur Aufnahme eines Zweiphasengemischs aus Kryogas und Kryoflüssigkeit, einen Drucksensor zum Messen des Behälterdrucks und eine von einem Kopfbereich des Behälters ausgehende Entnahmeleitung für Kryogas zum Speisen eines Verbrauchers.

Um den Energiegehalt von Energieträgern, welche unter Normalbedingungen gasförmig sind, zu erhöhen, werden diese für Transport- und Lagerungszwecke entweder komprimiert und in einem Druckbehälter gespeichert oder auf Tieftemperatur abgekühlt, dadurch verflüssigt und in einem temperaturisolierten Behälter gespeichert. So werden beispielsweise zum Antrieb von Fahrzeugen verflüssigtes Erdgas (Liquefied Natural Gas, LNG) oder verflüssigter Wasserstoff als Zweiphasengemisch mit hoher Energiedichte gespeichert, um hinterher beispielsweise zum Betrieb von Verbrennungskraftmaschinen oder Brennstoffzellen der Fahrzeuge genutzt zu werden.

Im Falle von LNG steht der Behälter unter einem Druck zwischen etwa 7 bis 10 bar, bei welchem ein Betanken erfolgt, und etwa 16 bar, oberhalb dessen ein kontrolliertes Abdampfen ("boil-off") über Sicherheitsventile erfolgt.

Da trotz der Isolation des Behälters ein Temperatureintrag von außen in den Behälter nicht gänzlich verhindert werden kann, steigt insbesondere während Stehzeiten, d.h. ohne Verbrauch, der Behälterdruck im Behälter um beispielsweise etwa 1 bar pro Tag. Um Abdampfverluste möglichst gering zu halten, soll bei hohem Behälterdruck, z.B. nach längerer Stehzeit, vorrangig Kryogas, welches sich in einem Kopfbereich des Behälters befindet, aus dem Behälter entnommen werden, da dies den Behälterdruck wesentlich rascher als die Entnahme von Kryoflüssigkeit senkt. Bei niedrigem Behälterdruck und/oder großem Leistungsbedarf des Verbrauchers wird im Allgemeinen vorrangig Kryoflüssigkeit entnommen.

Dazu ist aus dem Stand der Technik unter anderem eine sogenannte "Economizer-Schaltung" bekannt, welche in einer vom Kopfbereich des Behälters ausgehenden ersten Entnahmeleitung ein Überdruckventil und in einer vom Behälter ausgehenden zweiten Entnahmeleitung für Kryoflüssigkeit eine Drossel vorsieht. Das Überdruckventil öffnet die erste Entnahmeleitung, wenn der Behälterdruck einen Schwellwert überschreitet, und schließt die erste Entnahmeleitung bei Unterschreiten des Schwellwerts. Die Drossel senkt den Druck in der zweiten Entnahmeleitung um beispielsweise 1 bar, sodass bei geöffnetem Überdruckventil Kryogas der Vorrang gegeben wird. Nachteilig an der Economizer-Schaltung ist unter anderem, dass bei geöffnetem Überdruckventil dem Behälter ein Gemisch aus Kryogas und Kryoflüssigkeit in unbestimmtem Verhältnis entnommen wird und somit der Behälterdruck nicht schnellstmöglich abgebaut wird.

Alternativ zur Economizer-Schaltung ist beispielsweise aus der WO 2016/172803 A1 oder aus der EP 3 236 132 A1 bekannt, die Drossel durch ein Schaltventil für Kryoflüssigkeit in der zweiten Entnahmeleitung zu ersetzen. Dies beseitigt die Nachteile der Economizer-Schaltung, jedoch sind Schaltventile, welche unter den Tieftemperaturbedingungen von LNG oder Flüssigwasserstoff einsetzbar sind, in ihrem Aufbau komplex und voluminös.

Aus der WO 2015/074148 A1 ist ferner Tanksystem bekannt, bei welchem Kryogas aus einem Kopfbereich eines Behälters entnommen wird, und dem Kryogas bei Bedarf mit Hilfe einer in einen Bodenbereich des Behälters ragenden Pumpe Kryoflüssigkeit beigemischt wird. Ähnlich wie Schaltventile für Kryogas bzw. Kryoflüssigkeit haben Pumpen für Kryoflüssigkeit einen komplexen Aufbau und sind ferner fehleranfälliger als herkömmliche Pumpen.

Die US 2,842,942 zeigt ein Tanksystem mit einem Behälter für ein kryogenes Zweiphasengemisch, einem Heizelement im Kryoflüssigkeitsbereich innerhalb des Behälters, das in zwei Teilstränge unterteilt ist, und zwei außerhalb des Behälters angeordneten Wärmetauschern. Beim Entnehmen von Kryogas aus dem Behälter wird, um der Kryoflüssigkeit im Behälter ausreichend Wärme zuzuführen, das Kryogas nacheinander durch den ersten Wärmetauscher, den ersten Teilstrang, den zweiten Wärmetauscher und den zweiten Teilstrang des Heizelements geführt, bevor es dem Tanksystem endgültig entnommen wird. Parallel zum zweiten Teilstrang ist eine Bypass-Leitung mit einem Ventil vorgesehen, das in Abhängigkeit vom Behälterdruck einen Teil des Gasstroms vom zweiten Teilstrang auf die Bypass-Leitung umlenkt.

Die vorliegende Erfindung setzt sich zum Ziel, ein Tanksystem zu schaffen, welches besonders einfach im Aufbau, zuverlässig im Betrieb und dabei für Verbraucher mit wechselndem Leistungsbedarf geeignet ist und zugleich hilft, Abdampfverluste zu vermeiden.

Dieses Ziel wird mit einem Tanksystem der einleitend genannten Art erreicht, umfassend ein im Behälter angeordnetes erstes Heizelement und ein an den Drucksensor angeschlossenes, das erste Heizelement steuerndes Schaltelement, welches zwischen einem ersten Schaltzustand, in welchem das erste Heizelement aktiviert ist, und einem zweiten Schaltzustand, in welchem das erste Heizelement deaktiviert ist, umschaltbar ist, wobei das Schaltelement den ersten Schaltzustand einnimmt, wenn der gemessene Behälterdruck kleiner als ein vorgegebener Schwellwert ist, und den zweiten Schaltzustand einnimmt, wenn der gemessene Behälterdruck größer als der Schwellwert ist.

Dank der reinen Kryogas-Entnahme ist der Behälterdruck in einem solchen Tanksystem jederzeit rasch absenkbar. Steigt der Leistungsbedarf des Verbrauchers, kann mit Hilfe des ersten Heizelements geregelt und rasch weiteres Kryogas erzeugt werden. Beispielsweise kann das erste Heizelement ein elektrisches Heizelement od.dgl. sein. Die Verwendung eines Heizelements ist wesentlich einfacher und zuverlässiger als eine zusätzliche Entnahme von Kryoflüssigkeit aus dem Behälter über eine separate zweite, mit einem Schaltventil versehene Leitung für Kryoflüssigkeit bzw. mit Hilfe einer in den Behälter reichenden oder integrierten Pumpe. Ferner ist der Behälterdruck eine einfach und zuverlässig zu ermittelnde und aussagekräftige Bestimmungsgröße für das Steuern des Heizelements mit Hilfe des Schaltelements. Damit kommt das Tanksystem ohne ein Schaltventil und ohne eine Pumpe aus, welche für Tieftemperaturbedingungen geeignet sind.

Das Tanksystem hat ferner ein zweites Heizelement, durch welches die Entnahmeleitung geführt ist, und eine Heizleitung, welche an einer stromab des zweiten Heizelements liegenden Abzweigung von der Entnahmeleitung abzweigt und an einer stromab der Abzweigung liegenden Einmündung in die Entnahmeleitung mündet, wobei das erste Heizelement ein Heizkörper ist, durch welchen die Heizleitung geführt ist. Auf diese Weise kann vorhandene Wärme genutzt werden, und zwar ohne Verlust von Kryogas bzw. Kryoflüssigkeit.

Erfindungsgemäß ist das Schaltelement entweder ein in der Heizleitung angeordnetes Schaltventil und ist in der Entnahmeleitung zwischen der Abzweigung und der Einmündung eine Drossel angeordnet. Dies ermöglicht den einfachen Wechsel zwischen dem ersten Schaltzustand, in welchem die Heizung geöffnet ist, und dem zweiten Schaltzustand, in welchem die Heizleitung geschlossen ist. Oder das Schaltelement ist ein in der Entnahmeleitung zwischen der Abzweigung und der Einmündung angeordnetes Schaltventil und ist in der Heizleitung eine Drossel angeordnet. Auch dadurch wird ein einfaches Umschalten zwischen dem ersten und dem zweiten Schaltzustand ermöglicht; ferner ist in diesem Fall die Entnahmeleitung drosselfrei.

Für ein rasches Absenken des Behälterdrucks ist günstig, wenn der genannte Schwellwert kleiner als 12 bar, bevorzugt kleiner als 10 bar, besonders bevorzugt zwischen etwa 7 bar und etwa 9 bar ist.

In einer besonders vorteilhaften Ausführungsform ist der Behälter mitsamt dem ersten Heizelement im Inneren eines thermisch isolierenden, zumindest von der Entnahmeleitung durchsetzten Gehäuses angeordnet, wobei das Schaltelement außerhalb des Gehäuses angeordnet ist und das Innere des Gehäuses frei von Schaltventilen ist. Das Tanksystem hat auf diese Weise einen besonders einfachen Aufbau, bei welchem alle mit Kryogas bzw. Kryoflüssigkeit unter Tieftemperaturbedingungen unmittelbar in Berührung kommenden Bauteile in einem gemeinsamen Gehäuse untergebracht sind und alle anderen Bauteile, insbesondere alle Schaltventile, außerhalb des Gehäuses liegen können.

Besonders günstig ist dabei, wenn das zweite Heizelement außerhalb des Gehäuses angeordnet und das Gehäuse von der Heizleitung durchsetzt ist. Dies vereinfacht die Zugänglichkeit des zweiten Heizelements; ferner wird auf diese Weise besonders wenig Wärme in das Innere des Gehäuses eingebracht, was den Aufbau des Tanksystems - insbesondere seine Isolation - weiter vereinfacht.

Vorteilhaft ist ferner, wenn der Drucksensor außerhalb des Gehäuses angeordnet ist. Der Drucksensor kann auf diese Weise von herkömmlicher Bauart sein. Dabei ist der Drucksensor bevorzugt an die Entnahmeleitung angeschlossen. Ein zusätzliches Durchsetzen des Gehäuses z.B. von einer Sensorleitung wird dadurch verhindert; dennoch kann der Behälterdruck präzise gemessen werden.

Vorteilhaft ist, wenn das Gehäuse einen Füllanschluss und einen Entgasungsanschluss aufweist, welche mit entsprechenden Füll- und Entgasungsleitungen des Behälters in Verbindung stehen. Ein Füllen bzw. (damit meist notwendig verbunden) ein Entgasen des Behälters ist auf diese Weise möglich, ohne dass die Füll- bzw. Entgasungsleitungen selbst das Gehäuse durchsetzen müssen. Gleichermaßen ist es vorteilhaft, wenn zumindest eine der Entnahme-, Füll- und Entgasungsleitungen mit einem das Gehäuse durchsetzenden Überdruckablass versehen ist. Auch dies schafft die klare Trennung zwischen jenen Bauteilen, welche im Inneren des Gehäuses thermisch isoliert sind, und jenen, welche außerhalb des Gehäuses liegen. Die für den Überdruckablass erforderlichen Überdruckventile können dadurch außerhalb des Gehäuses angeordnet sein.

Die Erfindung wird nachfolgend anhand eines in der beigeschlossenen Zeichnung dargestellten Ausführungsbeispiels näher erläutert. Darin zeigt:

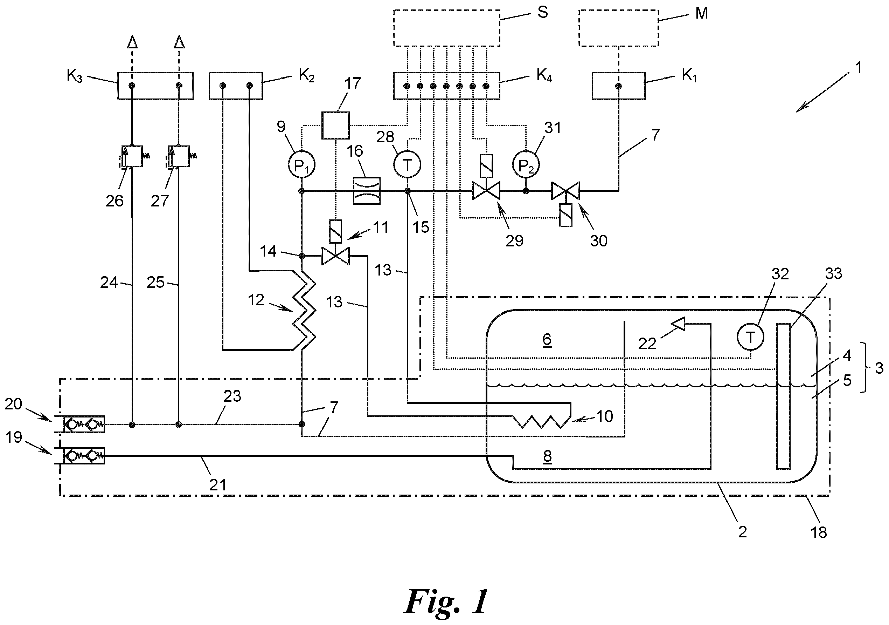

Fig. 1 ein Tanksystem gemäß der Erfindung in Form eines vereinfachten Hydraulikschemas.

Fig. 1 zeigt ein Tanksystem 1, das einen Behälter 2 umfasst, in welchem ein Zweiphasengemisch 3 aus Kryogas 4 und Kryoflüssigkeit 5 aufgenommen ist. Wie in Fig. 1 ersichtlich, befindet sich das weniger dichte Kryogas 4 im Wesentlichen in einem Kopfbereich 6 des Behälters 2, von welchem Kopfbereich 6 eine Entnahmeleitung 7 für Kryogas 4 ausgeht. Die dichtere Kryoflüssigkeit 5 sammelt sich in einem Bodenbereich 8 des Behälters 2. Das Tanksystems 1 umfasst ferner einen Drucksensor 9, welcher einen Behälterdruck P₁ misst, und dazu entweder im Behälter 2 angeordnet oder an den Behälter 2 oder die Entnahmeleitung 7 angeschlossen ist.

Die Kryoflüssigkeit 5 ist z.B. verflüssigtes Erdgas (Liquefied Natural Gas, LNG), verflüssigter Wasserstoff od.dgl. und bildet beim Verdampfen in Folge eines unvermeidbaren Temperatureintrags von außen in den Behälter 2 das Kryogas 4.

Über die Entnahmeleitung 7 wird ein Verbraucher M (z.B. eine Verbrennungskraftmaschine oder eine Brennstoffzelle eines Fahrzeugs od.dgl.) gespeist, welcher in diesem Beispiel über eine optionale Entnahmekonsole K₁ an das Tanksystem 1 angeschlossen wird.

Das Tanksystem 1 hat ferner ein erstes Heizelement 10, welches im Behälter 2 angeordnet ist, und ein Schaltelement 11, welches an den Drucksensor 9 angeschlossen ist und das erste Heizelement 10 steuert. Das Schaltelement 11 ist zwischen einem ersten Schaltzustand, in welchem das erste Heizelement 10 aktiviert ist, d.h. heizt, und einem zweiten Schaltzustand umschaltbar, in welchem das erste Heizelement 10 deaktiviert ist, d.h. nicht heizt. Dabei nimmt das Schaltelement 11 den ersten Schaltzustand ein, wenn der vom Drucksensor 9 gemessene Behälterdruck P₁ kleiner als ein vorgegebener Schwellwert σ ist, und nimmt den zweiten Schaltzustand ein, wenn der gemessene Behälterdruck P₁ größer als der Schwellwert σ ist. Hat somit der Verbraucher M einen hohen Leistungsbedarf und entnimmt deshalb eine große Menge Kryogas 4 aus dem Kopfbereich 6 des Behälters 2, dann sinkt der Behälterdruck P₁ und das erste Heizelement 10 wird bei Unterschreiten des Schwellwerts σ aktiviert. Infolgedessen wird mit Hilfe des Heizelements 10 Kryoflüssigkeit 5 zu Kryogas 4 verdampft, wodurch der Behälterdruck P₁ steigt bzw. der Verbraucher M weiteres Kryogas 4 aus dem Behälter 2 entnehmen kann. Ist andererseits der Behälterdurck P₁ hoch, d.h. größer als der Schwellwert σ, ist das Heizelement 10 deaktiviert, sodass das vom Verbraucher M entnommene Kryogas 4 unmittelbar den Behälterdruck P₁ senkt.

Der genannte Schwellwert σ ist abhängig von der Art der Kryoflüssigkeit 5 bzw. des Kryogases 4, d.h. des Zweiphasengemischs 3, sowie von der Bauart des Behälters 2; z.B. ist für ein LNG-Zweiphasengemisch 3 der Schwellwert σ optional kleiner als 12 bar, insbesondere kleiner als 10 bar, dabei beispielsweise zwischen etwa 7 bar und etwa 9 bar.

Das dem Behälter 2 entnommene Kryogas 4 wird optional über die Entnahmeleitung 7 dem Verbraucher M direkt zugeführt. In anderen Ausführungsformen wird das Kryogas 4 hingegen, bevor es zum Verbraucher M gelangt, erwärmt, wozu das Tanksystem 1 im Beispiel der Fig. 1 ein zweites Heizelement 12 umfasst, durch welches die Entnahmeleitung 7 geführt ist. Das zweite Heizelement 12 ist beispielsweise ein Wärmetauscher, welcher von außen, z.B. mit Abwärme vom Verbraucher M über eine optionale Wärmekonsole K₂, gespeist wird. Alternativ könnte das zweite Heizelement 12 eine elektrische Heizung od.dgl. sein.

Ähnlich dazu kann das erste Heizelement 10 z.B. eine elektrische Heizung sein, welche vom Schaltelement 11 elektrisch zu- bzw. abgeschaltet wird. Im Beispiel der Fig. 1 hingegen hat das Tanksystem 1 eine Heizleitung 13, welche an einer Abzweigung 14, die stromab, d.h. verbraucherseitig, des zweiten Heizelements 12 liegt, von der Entnahmeleitung 7 abzweigt und an einer stromab der Abzweigung 14 liegenden Einmündung 15 in die Entnahmeleitung 7 mündet. Dabei ist das erste Heizelement 10 ein Heizkörper, durch welchen die Heizleitung 13 zwischen der Abzweigung 14 und der Einmündung 15 geführt ist.

In der Ausführungsform der Fig. 1 ist das Schaltelement 11 ein in der Heizleitung 13 angeordnetes Schaltventil; ferner ist in der Entnahmeleitung 7 zwischen der Abzweigung 14 und der Einmündung 15 eine Drossel 16 angeordnet. Die Drossel 16 gewährleistet, dass im ersten Schaltzustand des Schaltelements 11 (hier: bei geöffnetem Schaltventil), d.h. bei aktiviertem ersten Heizelement 10, das erste Heizelement 10 zwischen der Abzweigung 14 und der Einmündung 15 Vorrang gegenüber der Entnahmeleitung 7 hat. Zum Ändern des Schaltzustands auf Grundlage des vom Drucksensor 9 gemessenen Behälterdrucks P₁, ist das Schaltelement 11 mit dem Drucksensor 9 verbunden, im dargestellten Beispiel über eine Steuerbox 17.

In einer dazu alternativen (nicht dargestellten) Ausführungsform ist das Schaltelement 11 ein Schaltventil, welches in der Entnahmeleitung 7 zwischen der Abzweigung 14 und der Einmündung 15 der Heizleitung 13 angeordnet ist; dabei ist in der Heizleitung 13 eine Drossel angeordnet. Die Wirkungsweise dieser Ausführungsform ergibt sich in sinngemäßer Umkehrung der zuvor beschriebenen und in Fig. 1 dargestellten Ausführungsform. Es versteht sich, dass - anstelle jeweils einer Drossel 16 und eines Schaltventils als Schaltelement 11 in der Entnahmeleitung 7 bzw. der Heizleitung 13 - sowohl in der Entnahmeleitung 7 zwischen der Abzweigung 14 und der Einmündung 15 der Heizleitung 13 als auch in der Heizleitung 13 selbst jeweils ein Schaltventil angeordnet sein könnte, welche Schaltventile je nach Schaltzustand abwechselnd geöffnet bzw. geschlossen sind. Gemäß einer weiteren Alternative ist das Schaltelement 11 ein an der Abzweigung 14 oder an der Einmündung 15 liegendes Umschaltventil (nicht dargestellt), welches zwischen der Entnahmeleitung 7 und der Heizleitung 13 umschaltet.

Im Beispiel der Fig. 1 ist der Behälter 2 mitsamt dem ersten Heizelement 10 im Inneren eines thermisch isolierenden, zumindest von der Entnahmeleitung 7 durchsetzten Gehäuses angeordnet. Das Schaltelement 11 ist optional außerhalb des Gehäuses 18 angeordnet und das Innere des Gehäuses 18 frei von Schaltventilen. In dieser Ausführungsform ist optional auch das zweite Heizelement 12 außerhalb des Gehäuses 18 angeordnet, sodass ferner die Abzweigung 14 und die Einmündung 15 außerhalb des Gehäuses 18 liegen und das Gehäuse 18 von der Heizleitung 13 durchsetzt ist. Der Drucksensor 9 kann dabei entweder im Inneren des Gehäuses 18, insbesondere im Inneren des Behälters 2 angeordnet sein oder, wie in Fig. 1 dargestellt, außerhalb des Gehäuses 18 angeordnet und dabei insbesondere an die Entnahmeleitung 7 angeschlossen sein (hier: stromab des zweiten Heizelements 12).

Im vorliegenden Beispiel weist das Gehäuse 18 ferner einen Füllanschluss 19 und einen Entgasungsanschluss 20 auf, um den Behälter 2 befüllen und dabei seinen Kopfbereich 6, wenn zum Absenken des Behälterrucks P₁ erforderlich, entgasen zu können. Der Füllanschluss 19 steht mit einer Füllleitung 21 in Verbindung, d.h. er ist an diese z.B. angeschweißt, angeklebt, einstückig mit diesen ausgeführt od.dgl. Die Füllleitung 21 mündet in den Behälter 2, z.B. in eine Sprühdüse 22 in seinem Kopfbereich 6. Der Entgasungsanschluss 20 steht mit einer Entgasungsleitung 23 in Verbindung und wird über die Entgasungsleitung 23 mit Kryogas 4 aus dem Kopfbereich 6 des Behälters 2 gespeist. Im dargestellten Beispiel zweigt dazu optional die Entgasungsleitung 23 von der Entnahmeleitung 7 im Inneren des Gehäuses 18 ab.

Das Tanksystem 1 des Beispiels von Fig. 1 hat ferner einen oder mehrere (hier: zwei) Überdruckablässe 24, 25, welche ebenfalls das Gehäuse 18 durchsetzen. Jeder Überdruckablass 24, 25 hat ein Überdruckventil 26, 27. Die Überdruckventile 26, 27 liegen optional außerhalb des Gehäuses 18. Dabei ist insbesondere die Entnahme-, die Füll- und/oder die Entgasungsleitung 7, 21, 23 mit einem der Überdruckablässe 24, 25 versehen. Im dargestellten Beispiel ist die Entgasungsleitung 23 mit beiden Überdruckablässen 24, 25 versehen. Die Überdruckventile 26, 27 öffnen jeweils bei einem Überdruck, welcher, wie im Stand der Technik bekannt, meist für jedes Überdruckventil 26, 27 unterschiedlich vorgegeben wird. Sie münden entweder unmittelbar ins Freie oder, wie in Fig. 1 dargestellt, in eine optionale Überdruckkonsole K₃ zum Anschluss nach außen.

Das Tanksystem 1 kann optional noch weitere Bauteile enthalten, z.B. einen Temperatursensor 28, welcher an der Einmündung 15 der Heizleitung 13 in die Entnahmeleitung 7 oder stromab davon angeordnet ist, und/oder ein oder zwei weitere, davon stromab liegende Schaltventile 29, 30. Ferner kann ein weiterer Drucksensor 31 z.B. stromab des Temperatursensors 28 (hier: zwischen den beiden Schaltventilen 29, 30) an die Entnahmeleitung 7 angeschlossen sein. Auch sind optional im Behälter 2 ein weiterer Temperatursensor 32 und/oder ein Füllstandssensor 33 angeordnet. Die Sensoren 9, 28, 32 und 33 und/oder die Schaltventile 29, 30 bzw. das Schaltelement 11 sind optional an eine Steuerungskonsole K₄ angeschlossen, an welche von außen eine Steuerung S, z.B. des Verbrauchers M, angeschlossen werden kann.

Es versteht sich ferner, dass das erste Heizelement 10, ähnlich wie der über die Wärmekonsole K₂ gespeiste Wärmetauscher 12, über eine Konsole (nicht dargestellt) von außen mit Wärme versorgt und dabei vom Schaltelement 11 aktiviert bzw. deaktiviert werden kann, falls gewünscht.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Tanksystem, umfassend einen Behälter (2) zur Aufnahme eines Zweiphasengemischs (3) aus Kryogas (4) und Kryoflüssigkeit (5), einen Drucksensor (9) zum Messen des Behälterdrucks und eine von einem Kopfbereich (6) des Behälters (2) ausgehende Entnahmeleitung (7) für Kryogas (4) zum Speisen eines Verbrauchers (M), ein im Behälter (2) angeordnetes erstes Heizelement (10) und ein an den Drucksensor (9) angeschlossenes, das erste Heizelement (10) steuerndes Schaltelement (11), welches zwischen einem ersten Schaltzustand, in welchem das erste Heizelement (10) aktiviert ist, und einem zweiten Schaltzustand, in welchem das erste Heizelement (10) deaktiviert ist, umschaltbar ist, wobei das Schaltelement (11) den ersten Schaltzustand einnimmt, wenn der gemessene Behälterdruck kleiner als ein vorgegebener Schwellwert ist, und den zweiten Schaltzustand einnimmt, wenn der gemessene Behälterdruck größer als der Schwellwert ist,
ferner umfassend ein zweites Heizelement (12), durch welches die Entnahmeleitung (7) geführt ist, und eine Heizleitung (13), welche an einer stromab des zweiten Heizelements (12) liegenden Abzweigung (14) von der Entnahmeleitung (7) abzweigt und an einer stromab der Abzweigung (14) liegenden Einmündung (15) in die Entnahmeleitung (7) mündet, wobei das erste Heizelement (10) ein Heizkörper ist, durch welchen die Heizleitung (13) geführt ist,
**dadurch gekennzeichnet, dass** entweder das Schaltelement (11) ein in der Heizleitung (13) angeordnetes Schaltventil ist und in der Entnahmeleitung (7) zwischen der Abzweigung (14) und der Einmündung (15) eine Drossel (16) angeordnet ist, oder das Schaltelement (11) ein in der Entnahmeleitung (7) zwischen der Abzweigung (14) und der Einmündung (15) angeordnetes Schaltventil ist und in der Heizleitung (13) eine Drossel angeordnet ist.

2. Tanksystem nach Anspruch 1, **dadurch gekennzeichnet, dass** der genannte Schwellwert kleiner als 12 bar, bevorzugt kleiner als 10 bar, besonders bevorzugt zwischen etwa 7 bar und etwa 9 bar ist.

3. Tanksystem nach Anspruch 1 oder 2, **dadurch gekennzeichnet, dass** der Behälter (2) mitsamt dem ersten Heizelement (10) im Inneren eines thermisch isolierenden, zumindest von der Entnahmeleitung (7) durchsetzten Gehäuses (18) angeordnet ist, wobei das Schaltelement (11) außerhalb des Gehäuses (18) angeordnet ist und das Innere des Gehäuses (18) frei von Schaltventilen ist.

4. Tanksystem nach Anspruch 3 in Verbindung mit Anspruch 1, **dadurch gekennzeichnet, dass** das zweite Heizelement (12) außerhalb des Gehäuses (18) angeordnet und das Gehäuse (18) von der Heizleitung (13) durchsetzt ist.

5. Tanksystem nach Anspruch 3 oder 4, **dadurch gekennzeichnet, dass** der Drucksensor (9) außerhalb des Gehäuses (18) angeordnet ist.

6. Tanksystem nach Anspruch 5, **dadurch gekennzeichnet, dass** der Drucksensor (9) an die Entnahmeleitung (7) angeschlossen ist.

7. Tanksystem nach einem der Ansprüche 3 bis 6, **dadurch gekennzeichnet, dass** das Gehäuse (18) einen Füllanschluss (19) und einen Entgasungsanschluss (20) aufweist, welche mit entsprechenden Füll- und Entgasungsleitungen (21, 23) des Behälters (2) in Verbindung stehen.

8. Tanksystem nach Anspruch 7, **dadurch gekennzeichnet, dass** zumindest eine der Entnahme-, Füll- und Entgasungsleitungen (7, 21, 23) mit einem das Gehäuse (18) durchsetzenden Überdruckablass (24, 25) versehen ist.

## Claims

1. A tank system comprising a vessel (2) for receiving a two-phase mixture (3) of cryogenic gas (4) and cryogenic liquid (5), a pressure sensor (9) for measuring the vessel pressure, and an extraction line (7) for cryogenic gas (4) originating from a top region (6) of the vessel (2) for feeding a consumer (M), a first heating element (10) arranged inside the vessel (2), and a switching element (11) connected to the pressure sensor (9) and controlling the first heating element (10), which switching element can be switched between a first switching state, in which the first heating element (10) is activated, and a second switching state, in which the first heating element (10) is deactivated, wherein the switching element (11) adopts the first switching state when the measured vessel pressure is below a predetermined threshold value and adopts the second switching state when the measured vessel pressure is above the threshold value,
further comprising a second heating element (12) through which the extraction line (7) is passed, and a heating line (13) that branches off from the extraction line (7) at a branch-off (14) downstream of the second heating element (12) and that discharges into the extraction line (7) at a junction (15) downstream of the branch-off (14), wherein the first heating element (10) is a heating body through which the heating line (13) is passed,
**characterized in that** either the switching element (11) is a switching valve arranged in the heating line (13) and a throttle (16) is arranged in the extraction line (7) between the branch-off (14) and the junction (15), or the switching element (11) is a switching valve arranged in the extraction line (7) between the branch-off (14) and the junction (15) and a throttle is arranged in the heating line (13).

2. The tank system according to claim 1, **characterized in that** said threshold value is less than 12 bar, preferably less than 10 bar, particularly preferably between about 7 bar and about 9 bar.

3. The tank system according to claim 1 or 2, **characterized in that** the vessel (2), together with the first heating element (10), is arranged inside a thermally insulating housing (18) which is penetrated at least by the extraction line (7), wherein the switching element (11) is arranged outside the housing (18), and the interior of the housing (18) is free of switching valves.

4. The tank system according to claim 3 in conjunction with claim 1, **characterized in that** the second heating element (12) is arranged outside the housing (18) and the housing (18) is penetrated by the heating line (13).

5. The tank system according to claim 3 or claim 4, **characterized in that** the pressure sensor (9) is arranged outside the housing (18).

6. The tank system according to claim 5, **characterized in that** the pressure sensor (9) is connected to the extraction line (7).

7. The tank system according to any one of claims 3 to 6, **characterized in that** the housing (18) has a filling connector (19) and a degassing connector (20), which are in communication with corresponding filling and degassing lines (21, 23) of the vessel (2).

8. The tank system according to claim 7, **characterized in that** at least one of the extraction, filling, and degassing lines (7, 21, 23) is equipped with an overpressure discharge (24, 25) penetrating the housing (18).

## Revendications

1. Système de réservoir comprenant un récipient (2) destiné à la réception d'un mélange à deux phases (3) à base de gaz cryogénique (4) et de liquide cryogénique (5), un capteur de pression (9) destiné à la mesure de la pression du récipient et une conduite de prélèvement (7) de gaz cryogénique (4) partant d'une zone supérieure (6) du récipient (2) destinée à l'alimentation d'un consommateur (M), un premier élément de chauffage (10) disposé dans le récipient (2) et un élément de commutation (11) raccordé au capteur de pression (9) et commandant le premier élément de chauffage (10), lequel peut être commuté entre un premier état de commutation, dans lequel le premier élément de chauffage (10) est activé, et un deuxième état de commutation, dans lequel le premier élément de chauffage (10) est désactivé, où l'élément de commutation (11) adopte le premier état de commutation lorsque la pression du récipient mesurée est inférieure à une valeur de seuil prédéfinie et adopte le deuxième état de commutation lorsque la pression du récipient mesurée est supérieure à la valeur de seuil,
comprenant en outre un deuxième élément de chauffage (12) à travers lequel la conduite de prélèvement (7) est menée et une conduite de chauffage (13), laquelle bifurque à partir de la conduite de prélèvement (7) au niveau d'une bifurcation (14) située en aval du deuxième élément de chauffage (12) et débouche dans la conduite de prélèvement (7) au niveau d'une jonction (15) située en aval de la bifurcation (14), où le premier élément de chauffage (10) est un corps chauffant à travers lequel la conduite de chauffage (13) est menée,
**caractérisé en ce que**, soit l'élément de commutation (11) est une vanne de commutation disposée dans la conduite de chauffage (13) et un étranglement (16) est disposé dans la conduite de prélèvement (7) entre la bifurcation (14) et la jonction (15), soit l'élément de commutation (11) est une vanne de commutation disposée dans la conduite de prélèvement (7) entre la bifurcation (14) et la jonction (15) et un étranglement est disposé dans la conduite de chauffage (13).

2. Système de réservoir selon la revendication 1, **caractérisé en ce que** ladite valeur de seuil est inférieure à 12 bar, de préférence est inférieure à 10 bar, de manière particulièrement préférée se situe entre environ 7 bar et environ 9 bar.

3. Système de réservoir selon la revendication 1 ou 2, **caractérisé en ce que** le récipient (2), ensemble avec le premier élément de chauffage (10), est disposé à l'intérieur d'un boitier (18) isolant thermiquement, traversé au moins par la conduite de prélèvement (7), où l'élément de commutation (11) est disposé à l'extérieur du boitier (18) et l'intérieur du boitier (18) est exempt de vannes de commutation.

4. Système de réservoir selon la revendication 3 en combinaison avec la revendication 1, **caractérisé en ce que** le deuxième élément de chauffage (12) est disposé à l'extérieur du boitier (18) et le boitier (18) est traversé par la conduite de chauffage (13).

5. Système de réservoir selon la revendication 3 ou 4, **caractérisé en ce que** le capteur de pression (9) est disposé à l'extérieur du boitier (18).

6. Système de réservoir selon la revendication 5, **caractérisé en ce que** le capteur de pression (9) est raccordé à la conduite de prélèvement (7).

7. Système de réservoir selon l'une des revendications 3 à 6, **caractérisé en ce que** le boitier (18) présente une connexion de remplissage (19) et une connexion de dégazage (20), lesquelles sont en communication avec des conduites de remplissage et de dégazage (21, 23) correspondantes du récipient (2).

8. Système de réservoir selon la revendication 7, **caractérisé en ce qu'**au moins une parmi les conduites de prélèvement, de remplissage et de dégazage (7, 21, 23) est munie d'une purge de surpression (24, 25) qui traverse le boitier (18).
